# EUROPÄISCHE PATENTSCHRIFT

(11) **EP 2 140 181 B1**
(45) Veröffentlichungstag und Bekanntmachung des Hinweises auf die Patenterteilung: **25.08.2010**
(21) Anmeldenummer: 08717666.5
(22) Anmeldetag: 12.03.2008
(51) Int. Cl.: F16K 11/16

(54) **WEGEVENTIL, SOWIE VENTILANORDNUNG**
DIRECTIONAL VALVE AND VALVE ARRANGEMENT
DISTRIBUTEUR ET ENSEMBLE SOUPAPE

(30) Priorität: 12.03.2007 AT 3882007
(43) Veröffentlichungstag der Anmeldung: 06.01.2010
(73) Patentinhaber: Hoerbiger Automatisierungstechnik Holding GmbH, 86956 Schongau (DE)
(72) Erfinder: TELTSCHER, Rainer, 83666 Waakirchen (DE); RUECKINGER, Robert, 86971 Peiting (DE); HOECHTL, Michael, 82362 Weilheim (DE)
(74) Vertreter: Grättinger Möhring von Poschinger Patentanwälte Partnerschaft
(86) Internationale Anmeldenummer: PCT/EP2008/052920
(87) Internationale Veröffentlichungsnummer: WO 2008/110568

(56) Entgegenhaltungen:
- EP-A- 0 921 322
- DE-A1- 4 201 442
- DE-U1- 29 712 083
- GB-A- 1 017 817

## Beschreibung

Die Erfindung betrifft ein Wegeventil, bestehend aus einer Bohrung mit zwei Ventilsitzen und zwei innerhalb der Bohrung axial verschiebbaren Ventilelementen, welche durch ein Federelement beaufschlagt sind, sowie drei in die Bohrung und zu den Ventilelementen führenden Anschlüssen, wobei eine Passage für das Druckmittel aus dem Bereich zwischen den Ventilsitzen auf die diesem Bereich entgegengesetzte Seite zumindest eines Ventilsitzes führt, welcher Bereich dadurch mit dem zwischen den Ventilsitzen herrschenden Druck beaufschlagt ist, sowie eine Ventilanordnung mit zwei derartigen Wegeventilen.

In der EP 0 921 322 A2 ist ein pneumatisches Steuerventil beschrieben, das die Verbindung von einer Druckquelle zu einem Verbraucher bzw. vom Verbraucher zu einer Entlüftung steuert. Dafür sind zwei unabhängige, schließfederbeaufschlagte Ventilkörper vorgesehen, die durch einen gemeinsamen Betätigungsstab geöffnet werden können. Im Betätigungsstab sind Kanäle ausgearbeitet, die von der Verbraucherseite ausgehen und in Ausgleichskammer münden, in welchen der dort anliegende Druck auf den Betätigungsstab bzw. die Rückseite der Ventilelemente wirkt. Meist wird aber der höchste Druck im System durch die Druckquelle und nicht den Verbraucher definiert, für welche Anwendungsfälle dieses Steuerventil nicht geeignet ist. Darüberhinaus erfordert die Steuerung der beiden Ventilsitze eine aktive Bewegung des Betätigungsstabes in beide axialen Richtungen, d.h. erfordert Druck und Zug von außen, was die Betätigung aufwendiger macht als Betätigung nur in einer axialen Richtung.

Die Aufgabe der vorliegenden Erfindung war daher ein druckausgeglichenes Wegeventil, vorzugsweise ein 3/2-Wegeventil, mit einfacher Betätigungsmöglichkeit von außen, bei welchem beide Schaltstellungen im Zuge einer Schaltbewegung in einer Bewegungsrichtung durchlaufen werden können, so daß beispielsweise ein Verbraucher einerseits mit einer Druckmittelquelle, vorzugsweise Druckluft, oder mit einer Entlüftung, vorzugsweise der Umgebungsatmosphäre, verbindbar ist.

Eine weitere Aufgabe war eine Ventilanordnung von zumindest zwei druckausgeglichenen Wegeventilen, vorzugsweise 3/2-Wegeventilen, mit einfacher Betätigungsmöglichkeit von außen, mit welchem zwei Verbraucher einerseits mit einer Druckmittelquelle, vorzugsweise für Druckluft, und vorzugsweise der gleichen Druckmittelquelle für beide Verbraucher, oder mit einer Entlüftung, vorzugsweise der Umgebungsatmosphäre, und vorzugsweise separat für beide Verbraucher, verbindbar ist.

Zur Lösung dieser ersten Aufgabe ist ein eingangs beschriebenes Wegeventil dadurch gekennzeichnet, daß zwei Anschlüsse radial, aber in Längsrichtung versetzt, und ein über den Ventilsitz der Bohrung gesteuerter Anschluß axial in die Bohrung führen, daß ein zweiter Ventilsitz axial verschiebbar im Inneren der Bohrung vorgesehen ist, wobei der erste Ventilsitz die Verbindung zwischen dem axialen Anschluß und einem der radialen Anschlüsse und der zweite Ventilsitz die Verbindung zwischen den beiden radialen Anschlüssen steuert, und wobei beide Ventilelemente mittels eines von außen betätigbaren Elementes betätigbar sind. Mit dieser Konstruktion kann durch eine durchgehende axiale Bewegung des betätigbaren Elementes von einer ersten Endstellung, in welcher beispielsweise die Verbindung von der Druckmittelquelle zum Verbraucher geöffnet gehalten ist, diese Verbindung geschlossen und durch gleichsinnige Fortsetzung der Betätigungsbewegung schließlich der zweite Ventilsitz geöffnet werden, um den Verbraucher in die Umgebung zu entlüften.

Gemäß einer ersten vorteilhaften Ausführungsform der Erfindung ist vorgesehen, daß die beiden Ventilelemente miteinander gekoppelt sind, wobei das Federelement das erste Ventilelement in Schließrichtung und das zweite Ventilelement in Öffnungsrichtung beaufschlagt. Damit muß die Betätigungskraft auf das von außen betätigbare Element lediglich in einer axialen Richtung aufgebracht werden, während die Bewegung in die entgegengesetzte Richtung, die beispielsweise die Entlüftung wieder verschließt und dann weiter wieder die Verbindung von Druckmittelquelle und Verbraucher öffnet, aufgrund der Wirkung des Federelementes bei Wegfall der Betätigungskraft von außen erfolgt.

Vorteilhafterweise ist dabei vorgesehen, daß der zweite Ventilsitz durch ein zweites Federelement vom ersten Ventilsitz weg beaufschlagt ist. Durch diese Ausführung kann eine Verzögerung zwischen den beiden Schaltvorgängen realisiert werden.

Dazu kann weiters das Merkmal dienen, daß die Ventilelemente einen fixen Abstand zueinander aufweisen, welcher Abstand geringer ist als der maximale Abstand der Ventilsitze zueinander.

Gemäß einer bevorzugten baulichen Ausführungsform ist ein Wegeventil mit den obigen Merkmalen weiters dadurch gekennzeichnet, daß der zweite Ventilsitz im Inneren eines buchsenförmigen, in der Bohrung verschiebbaren Elementes ausgearbeitet ist, wobei zwischen der Außenseite des Elementes und der Innenwandung der Bohrung ein gegenüber der übrigen Bohrung abgetrennter Raum definiert ist, wobei das buchsenförmige Element zumindest eine radiale Durchgangsöffnung von einem der radialen Anschlüsse zum Ventilsitz aufweist, und wobei der Ventilsitz im buchsenförmigen Element in Längsrichtung gesehen zwischen den radialen Anschlüssen vorgesehen ist. Diese Ausführungsform erlaubt eine funktionssichere und einfache Realisierung zweier gegeneinander beweglicher Ventilsitze innerhalb der Bohrung für das erfindungsgemäße Wegeventil.

Zur einfachen Realisierung der aufeinanderfolgenden Schaltvorgänge bei axialer Bewegung des von außen betätigbaren Elementes in lediglich einer Richtung ist bei dieser speziellen Bauweise vorgesehen, daß das von außen betätigbare Element durch das buchsenförmige Element hindurchgeführt zum ersten Ventilelement geführt ist, und das zweite Ventilelement am von außen betätigbaren, Element vorgesehen ist.

Wenn in einer ersten Endstellung des von außen betätigbaren Elementes der erste Ventilsitz geschlossen und der weitere Ventilsitz geöffnet ist und das Druckmittel zwischen den radialen Anschlüssen strömen kann, und wobei in der zweiten Endstellung des von außen betätigbaren Elementes der erste Ventilsitz geöffnet und der weitere Ventilsitz geschlossen ist und das Druckmittel zwischen einem der radialen Anschlüsse und dem axialen Anschluß strömen kann, und wobei eine Passage für das Druckmittel aus dem Bereich zwischen den Ventilsitzen auf die diesem Bereich entgegengesetzte Seite des buchsenförmigen Elementes führt, welcher Bereich dadurch mit dem zwischen den Ventilsitzen herrschenden Druck beaufschlagt ist, kann bei Anschluß des Systembereiches mit dem höchsten Druck an jenem radialen Anschluß, der im Bereich des buchsenförmigen Elementes in die Bohrung führt, die optimale Druckkompensation am Ventil erreicht werden.

Durch die Möglichkeit, den axialen Anschluß mit größtmöglichem Querschnitt ausführen zu können, kann bei einer Ausführungsform, bei welcher der axiale Anschluß mit der Umgebung verbunden und durch eine staub- und wasserdicht ausgeführte Abdeckung geschützt ist, welche vorzugsweise mit einer elastischen Membran versehen ist, die bestmögliche Entlüftung des Verbrauchers sichergestellt werden.

Vorzugsweise kann dabei auch vorgesehen sein, daß die Abdeckung dem ersten Federelement als Widerlager dient.

Vorteilhafterweise ist weiters vorgesehen, daß das erste Federelement das von außen betätigbare Element in axialer Richtung aus der Bohrung hinaus beaufschlagt.

Um die Betätigung beider Wegeventile zu erleichtern, kann auch vorgesehen sein, daß beide Wegeventile parallel zueinander in einem gemeinsamen Gehäuse angeordnet sind, wobei die äußeren Enden der von außen betätigbaren Elemente nebeneinander liegen.

Wenn die zur radialen Durchgangsöffnung des verschiebbaren Elementes führenden radialen Anschlüsse der einzelnen Ventile vorzugsweise mit einem gemeinsamen Anschluß am gemeinsamen Gehäuse verbunden sind, und die weitere radiale Öffnung beider Ventile zu jeweils einem separaten Anschluß am gemeinsamen Gehäuse führt, können zwei Verbraucher von einer gemeinsamen Druckmittelquelle versorgt und geschaltet werden.

In der nachfolgenden Beschreibung soll die Erfindung anhand eines bevorzugten Ausführungsbeispieles einer Ventilanordnung und der beigefügten Zeichnungen näher erläutert werden.

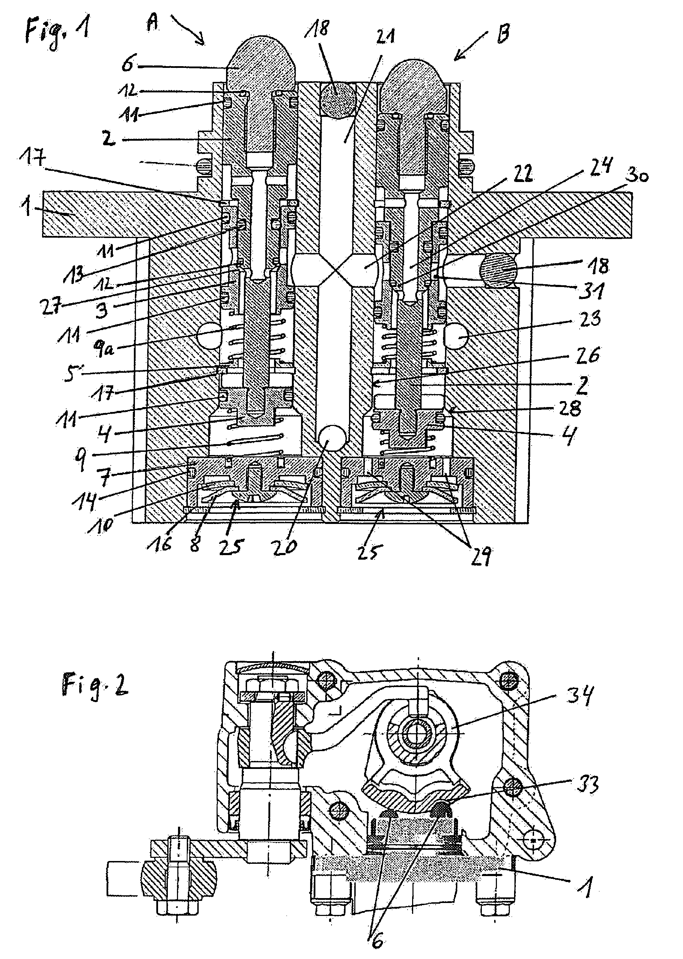

Dabei zeigt die Fig. 1 einen Längsschnitt durch eine erfindungsgemäße Ventilanordnung, bei der ein Ventil in der ersten Schaltstellung und das andere Ventil in der zweiten möglichen Schaltstellung ist, und die Fig. 2 ist eine Darstellung der Ventilanordnung, eingebaut in einem Fahrzeuggetriebe.

Die in Fig. 1 im Schnitt dargestellte Ventilanordnung umfasst zwei unabhängig voneinander betätigbare 3/2-Wegeventile A, B die in einem gemeinsamen Gehäuse 1 parallel zueinander angeordnet sind, wobei die äußeren Enden 6 der von außen betätigbaren Elemente 2 nebeneinander liegen. Diese Enden 6 sind vorzugsweise auf die Elemente 2 aufgeschraubt und verschließen, mit einer Dichtung 12 versehen, die Druckausgleichspassagen 24 in den Elementen 2. Am Gehäuse 1 ist ein Anschluß 20 vorgesehen, der über einen Kanal 21 zu Kanälen 22 führt, welche Kanäle 22 radial in die Bohrungen 26 der Ventile A, B führen. Ein wenig in axialer Richtung von den Kanälen 22 beabstandet führen weitere radiale Kanäle 23 von den Bohrungen 26 wieder hinaus und weiter zu jeweils einem Gehäuse-Anschluß pro Ventil A, B. Beispielsweise kann am Anschluß 20 eine gemeinsame pneumatische Druckmittelquelle angeschlossen werden, welche dann über die Ventile A, B gesteuert zwei Verbraucher, die über die Gehäuse-Anschlüsse aus den Kanälen 23 unabhängig voneinander versorgen kann. Beide Ventile A, B haben eine separate axiale Entlüftungsöffnung 25, die aus dem Gehäuse 1 vorzugsweise unmittelbar in die Umgebung führt. In weiterer Folge soll nun eines der Ventile A, B näher beschrieben werden.

Jedes der erfindungsgemäßen Wegeventile, beispielsweise Ventile A, B, bestehen aus einer Bohrung 26, in welcher zwei Ventilelemente 4, 12 axial verschiebbar sind, um zwei Ventilsitze 27, 28 zu öffnen oder zu verschließen. Einer der Ventilsitze ist durch eine vorzugsweise konisch ausgeformte Querschnittsvergrößerung 28 der Bohrung 26 gebildet, wobei sich an den Abschnitt der Bohrung 26 mit vergrößertem Querschnitt die axiale Entlüftungsöffnung 25 anschließt. Gesteuert wird dieser erste Ventilsitz 28 durch ein kolbenartiges Ventilelement 4 mit ringförmiger Dichtung 11, welches am Ende des von außen betätigbaren Elementes 2 aufgeschraubt ist. Durch Druckausübung auf das betätigbare Element 2 wird das Ventilelement axial 4 in den Bereich des vergrößerten Querschnitts der Bohrung 26 verschoben und gibt somit die Verbindung zwischen dem Inneren der Bohrung 26 und der Entlüftungsöffnung 25 frei. Die Schließbewegung wird nach Beendigung der Krafteinwirkung auf das Element 2 durch das Federelement 9 bewirkt, das zwischen einer Abdeckung 7 für die Entlüftungsöffnung 25 und dem Ventilelement 4 eingespannt ist.

In der Abdeckung 7 sind Entlüftungspassagen 29 ausgearbeitet, durch die das Druckmittel aus der Bohrung 26 in die Umgebung abströmen kann. Diese sind vorzugsweise konzentrisch um die Achse der Bohrung 26 angeordnet und mit einer vorzugsweise ringförmigen, auslenkbaren und in Schließrichtung vorgespannten Abdeckung 10 versehen. Die Abdeckung 10 ist vorzugweise durch eine elastische Membran gebildet, deren maximale Auslenkung durch ein konisches Element 8 begrenzt ist, das auch gleich die Abdeckung 10 vor Beschädigung schützt. Durch die Abdeckung 10 und das Element 8 ist die Bohrung 26 gegen Eindringen von Staub, Verschmutzungen und Feuchtigkeit über die Entlüftungsöffnung 25 her geschützt. Die Abdeckung 7 ist mit einer ringförmigen Dichtung 14 versehen in den äußersten Abschnitt der Bohrung 26 eingesetzt und wird dort beispielsweise durch eine Sprengring 16 fixiert.

Der zweite Ventilsitz 27, der die Verbindung zwischen den radialen Kanälen 22 und 23 steuert, ist als innenliegender, vorzugsweise konischer Abschnitt eines buchsenartigen Elementes 3 ausgebildet, welches buchsenartige Element 3 im Inneren der Bohrung 26 axial verschiebbar und mit zwei ringförmig umlaufenden Auskragungen mit darin eingesetzten ringförmigen Dichtungen 11 dichtend an der Innenwandung der Bohrung 26 anliegend ausgebildet ist. Dieser zweite Ventilsitz 27 wird durch ein Ventilelement gesteuert, das durch eine vorzugsweise ebenfalls konisch verlaufende Querschnittsveränderung 30 des durch das buchsenartige Element 3 hindurch geführte, von außen betätigbare Element 2 gebildet ist, vorzugsweise unter Verwendung einer ringförmigen Dichtung 12. Beide Ventilelemente 4, 30 sind somit über das betätigbare Element in vorzugsweise starrem Abstand zueinander gekoppelt, wobei durch die Beaufschlagung des ersten Ventilelementes 4 durch das Federelement 9 in Schließrichtung gleichzeitig das zweite Ventilelement 30 in Öffnungsrichtung beaufschlagt wird.

Zwischen den beiden Enden des buchsenförmigen Elementes 3 und der Innenwandung der Bohrung 26 wird ein Ringraum definiert, wobei die relative Lage des Elementes 3 in der Bohrung derart gewählt ist, daß einer der radialen Kanäle 23 außerhalb des Ringraumes liegt und der andere radiale Kanal 22 im Bereich des Ringraumes liegt, gleich in welcher seiner möglichen axialen Stellungen sich das Element 3 befindet. Ein Kanal oder mehrere Kanäle 31 verbinden den Ringraum um das Element 3 mit seinen Inneren, wobei über diese Kanäle 31 auch die Verbindung zwischen den radialen Kanälen 22 bzw. 23 zum Ventilsitz 27 gewährleistet ist.

Das buchsenförmige Element 3 ist durch ein Federelement 9a beaufschlagt, welches Federelement 9a zwischen einer Anschlagplatte 5, die von einem Sprengring 17 axial fixiert wird, und dem Element 3 eingespannt ist. Durch dieses Federelement 9a wird das Element 3 auf einen weiteren Sprengring 17 hin beaufschlagt, der eine Endstellung des Elementes 3 definiert. Die Wirkung des Federelementes 9a ist derart ausgerichtet, daß sie den beweglichen Ventilsitz 27 vom fixen Ventilsitz 28 weg beaufschlagt. Der innere freie Querschnitt des Sprengringes 17 ist so groß, daß das von außen betätigbare Element 2 sich axial frei hindurchbewegen kann.

Der Abstand der beiden Ventilelemente 4 bzw. 30 am betätigbaren Element 2 ist vorzugsweise geringer als der maximale Abstand, den die Ventilsitze 27, 28 voneinander einnehmen können.

Vorzugsweise unmittelbar im betätigbaren Element 2 ist schließlich zumindest eine Passage 24 ausgearbeitet, die den Bereich zwischen den beiden Ventilsitzen 27, 28 mit jenem Bereich der Bohrung 26 verbindet, der zwischen dem äußeren Ende 6 des betätigbaren Elementes 2 und dem buchsenförmigen Element 3 liegt. Dieser Bereich wird pneumatisch durch die Dichtungen 12 und 13 begrenzt. Bei vom Ventilsitz 27 abgehobenem Ventilelement 30 ist damit ein Druckausgleich über den gesamten Ventilbereich zwischen dem Ventilelement 4 und dem nach außen über eine ringförmige Dichtung 11 abgedichten Ende des betätigbaren Elementes 2 gewährleistet. Damit sind die Ventileigenschaften allein durch die konstruktive Auslegung der Querschnitte und Federelemente vorgebbar und werden nicht durch das anliegende Druckniveau verändert.

In Fig. 1 ist das linke Ventil A in einer der beiden Schaltstellungen dargestellt, in welcher das äußere Ende 6 des betätigbaren Elementes sich in seiner am weitesten nach außen ragenden Position befindet. Dabei ist durch die oben erläuterten Abstandsverhältnisse zwischen den Ventilsitzen 27, 28 und den Ventilelementen 4, 30 das zweite Ventilelement 30 vom zweiten Ventilsitz 27 abgehoben, so daß die Verbindung zwischen den radialen Kanälen 22 und 23 freigegeben ist. Der erste Ventilsitz 28 ist dabei durch das erste Ventilelement 4 verschlossen, so daß der axiale Anschluß gesperrt ist. Bei Ausübung von Druck auf das äußere Ende 6 gegen die Wirkung des Federelementes 9 verschließt zuerst das zweite Ventilelement 30 den zweiten Ventilsitz 27, während die axiale Verschiebung des ersten Ventilelementes 4 noch nicht so weit geht, daß der Durchgang durch den ersten Ventilsitz 28 geöffnet wird. Bei weiterer Druckausübung und damit axialer Verschiebung des betätigbaren Elementes 2 nimmt dieses Element 2 das buchsenförmige Element 3 gegen die Wirkung des Federelementes 9a mit. Um dabei die Ventilteile 27, 30 und speziell die Dichtung 12 vor zu großen Kräften zu schützen, kommt im Zuge dieser Bewegung eine Schulter 32 des Elementes 2 in Anschlag auf das Ende des buchsenförmigen Elementes 3 und übernimmt den Hauptanteil an der axialen Verschiebung. Im Zuge dieser weiteren axialen Bewegung von Element 2 und Element 3 hebt schließlich auch das mit dem betätigbaren Element 2 verbundene Ventilelement 4 vom Ventilsitz 28 ab, so daß nunmehr die Verbindung zwischen einem der radialen Kanäle 23 und dem axialen Anschluß 25 freigegeben ist.

Die Fig. 2 zeigt eine erfindungsgemäße Ventilanordnung in einer Anwendung an Getrieben mit Hilfskraftunterstützung für Fahrzeuge, insbesonders für Lastkraftwagen. Hier ist das Gehäuse 1 der Ventilanordnung zur Ansteuerung der Zylinder vorgesehen, welche die einzelnen Gruppen schalten. Dazu werden die beiden Ventile A, B der Ventilanordnung durch Nocken oder auch Ausfräsungen 33 in der Wählachse 34 des Getriebes betätigt. Über den Anschluß 20 wird die Ventilanordnung dabei durch die Druckmittelquelle versorgt, während die Zylinder über die radialen Kanäle 23 und die nachgeschalteten Anschlüsse wahlweise mit der Druckmittelquelle verbunden werden können. Die Entlüftung der Zylinder erfolgt über den axialen Anschluß und die Entlüftungsöffnungen 25.

## Patentansprüche

1. Wegeventil, bestehend aus einer Bohrung (26) mit zwei Ventilsitzen (27, 28) und zwei innerhalb der Bohrung (26) axial verschiebbaren Ventilelementen (4, 30), welche durch ein Federelement (9) beaufschlagt sind, sowie drei in die Bohrung (26) und zu den Ventilelementen (4, 30) führenden Anschlüssen (22, 23, 25), wobei eine Passage (24) für das Druckmittel aus dem Bereich zwischen den Ventilsitzen (27, 28) auf die diesem Bereich entgegengesetzte Seite zumindest eines Ventilsitzes (27, 28) führt, welcher Bereich **dadurch** mit dem zwischen den Ventilsitzen herrschenden Druck beaufschlagt ist, **dadurch gekennzeichnet, daß** zwei Anschlüsse (22, 23) radial, aber in Längsrichtung versetzt, und ein über den ersten Ventilsitz (28) der Bohrung (26) gesteuerter Anschluß (25) axial in die Bohrung (26) führen, daß ein zweiter Ventilsitz (27) axial verschiebbar im Inneren der Bohrung (26) vorgesehen ist, wobei der erste Ventilsitz (28) die Verbindung zwischen dem axialen Anschluß (25) und einem der radialen Anschlüsse (23) und der zweite Ventilsitz (27) die Verbindung zwischen den beiden radialen Anschlüssen (22, 23) steuert, und wobei beide Ventilelemente (4, 30) mittels eines von außen betätigbaren Elementes (2, 6) betätigbar sind.

2. Wegeventil nach Anspruch 1, **dadurch gekennzeichnet, daß** die beiden Ventilelemente (4, 30) miteinander gekoppelt sind, wobei das Federelement (9) das erste Ventilelement (4) in Schließrichtung und das zweite Ventilelement (30) in Öffnungsrichtung beaufschlagt.

3. Wegeventil nach Anspruch 1 oder 2, **dadurch gekennzeichnet, daß** der zweite Ventilsitz (27) durch ein zweites Federelement (9a) vom ersten Ventilsitz (28) weg beaufschlagt ist.

4. Wegeventil nach einem der Ansprüche 1 bis 3, **dadurch gekennzeichnet, daß** die Ventilelemente (4, 30) einen fixen Abstand zueinander aufweisen, welcher Abstand geringer ist als der maximale Abstand der Ventilsitze (27, 28) zueinander.

5. Wegeventil nach einem der Ansprüche 1 bis 4, **dadurch gekennzeichnet, daß** der zweite Ventilsitz (27) im Inneren eines buchsenförmigen, in der Bohrung (26) verschiebbaren Elementes (3) ausgearbeitet ist, wobei zwischen der Außenseite des Elementes (3) und der Innenwandung der Bohrung (26) ein gegenüber der übrigen Bohrung abgetrennter Raum definiert ist, wobei das buchsenförmige Element (3) zumindest eine radiale Durchgangsöffnung (31) von einem der radialen Anschlüsse (22) zum Ventilsitz (27) aufweist, und wobei der Ventilsitz (27) im buchsenförmigen Element (3) in Längsrichtung gesehen zwischen den radialen Anschlüssen (22, 23) vorgesehen ist.

6. Wegeventil nach Anspruch 5, **dadurch gekennzeichnet, daß** das von außen betätigbare Element (2, 6) durch das buchsenförmige Element (3) hindurchgeführt zum ersten Ventilelement (4) geführt ist, und das zweite Ventilelement (30) am von außen betätigbaren Element (2, 6) vorgesehen ist.

7. Wegeventil nach einem der Ansprüche 1 bis 6, **dadurch gekennzeichnet, daß** in einer ersten Endstellung des von außen betätigbaren Elementes (2, 6) der erste Ventilsitz (28) geschlossen und der weitere Ventilsitz (27) geöffnet ist und das Druckmittel zwischen den radialen Anschlüssen (22, 23) strömen kann, und wobei in der zweiten Endstellung des von außen betätigbaren Elementes (2, 6) der erste Ventilsitz (28) geöffnet und der weitere Ventilsitz (27) geschlossen ist und das Druckmittel zwischen einem der radialen Anschlüsse (23) und dem axialen Anschluß (25) strömen kann.

8. Wegeventil nach einem der Ansprüche 1 bis 7, **dadurch gekennzeichnet, daß** der axiale Anschluß (25) mit der Umgebung verbunden und durch eine staub- und wasserdicht ausgeführte Abdeckung (7, 8, 10) geschützt ist, welche vorzugsweise mit einer elastischen Membran (10) versehen ist.

9. Wegeventil nach Anspruch 8, **dadurch gekennzeichnet, daß** die Abdeckung (7, 8, 10) dem ersten Federelement (9) als Widerlager dient.

10. Wegeventil nach einem der Ansprüche 1 bis 9, **dadurch gekennzeichnet, daß** das erste Federelement (9) das von außen betätigbare Element (2, 6) in axialer Richtung aus der Bohrung (26) hinaus beaufschlagt.

11. Ventilanordnung mit zwei Wegeventilen (A, B) gemäß zumindest einem der Ansprüche 1 bis 10, **dadurch gekennzeichnet, daß** beide Wegeventile (A, B) parallel zueinander in einem gemeinsamen Gehäuse (1) angeordnet sind, wobei die äußeren Enden (6) der von außen betätigbaren Elemente (2, 6) nebeneinander liegen.

12. Ventilanordnung nach Anspruch 11, **dadurch gekennzeichnet, daß** die zur radialen Durchgangsöffnung (31) des buchsenförmigen Elementes (3) führenden radialen Anschlüsse (22) der einzelnen Ventile (A, B) vorzugsweise mit einem gemeinsamen Anschluß (20) am gemeinsamen Gehäuse (1) verbunden sind, und die weitere radiale Öffnung (23) beider Ventile zu jeweils einem separaten Anschluß am gemeinsamen Gehäuse (1) führt.

## Claims

1. Directional valve, consisting of a bore (26) with two valve seats (27, 28) and two valve elements (4, 30) axially displaceable inside the bore (26), which are acted upon by a spring element (9), and three connections (22, 23, 25) leading into the bore (26) and to the valve elements (4, 30), wherein a passage (24) for the pressure medium leads out from the region between the valve seats (27, 28) to the side, opposite this region, at least of one valve seat (27, 28), which region is thereby acted upon by the pressure prevailing between the valve seats, **characterized in that** two connections (22, 23) lead radially, but offset in longitudinal direction, and one connection (25)controlled via the first valve seat (28) of the bore leads axially into the bore (26), that a second valve seat (27) is provided axially displaceably in the interior of the bore (26), wherein the first valve seat (28) controls the connection between the axial connection (25) and one of the radial connections (23) and the second valve seat (27) controls the connection between the two radial connections (22, 23), and wherein the two valve elements (4, 30) are able to be actuated by means of an element (2, 6) which is actuatable from the exterior.

2. Directional valve according to Claim 1, **characterized in that** the two valve elements (4, 30) are coupled with each other, wherein the spring element (9) acts upon the first valve element (4) in the closing direction and the second valve element (30) in the opening direction.

3. Directional valve according to Claim 1 or 2, **characterized in that** the second valve seat (27) is acted upon by a second spring element (9a) away from the valve seat (28).

4. Directional valve according to one of Claims 1 to 3, **characterized in that** the valve elements (4, 30) have a fixed distance from each other, which distance is less than the maximum distance of the valve seats (27, 28) with respect to each other.

5. Directional valve according to one of Claims 1 to 4, **characterized in that** the second valve seat (27) is worked in the interior of a bush-shaped element (3) displaceable in the bore (26), wherein a space is defined, separated with respect to the other bore, between the outer side of the element (3) and the inner wall of the bore (26), wherein the bush-shaped element (3) has at least one radial through-opening (31) from one of the radial connections (22) to the valve seat (27), and wherein the valve seat (27) in the bush-shaped element (3), viewed in longitudinal direction, is provided between the radial connections (22, 23).

6. Directional valve according to Claim 5, **characterized in that** the element (2, 6), which is actuatable from the exterior, is guided through the bush-shaped element (3) to the first valve element (4), and the second valve element (30) is provided on the element (2, 6) which is actuatable from the exterior.

7. Directional valve according to one of Claims 1 to 6, **characterized in that** in a first final position of the element (2, 6) which is actuatable from the exterior, the first valve seat (28) is closed and the further valve seat (27) is open, and the pressure medium can flow between the radial connections (22, 23), and wherein in the second final position of the element (2, 6) which is actuatable from the exterior, the first valve seat (28) is open and the further valve seat (27) is closed, and the pressure medium can flow between one of the radial connections (23) and the axial connection (25).

8. Directional valve according to one of Claims 1 to 7, **characterized in that** the axial connection (25) is connected with the environment and is protected by a cover (7, 8, 10), constructed so as to be dust- and water-tight, which is preferably provided with an elastic membrane (10).

9. Directional valve according to Claim 8, **characterized in that** the cover (7, 8, 10) serves as an abutment for the first spring element (9).

10. Directional valve according to one of Claims 1 to 9, **characterized in that** the first spring element (9) acts upon the element (2, 6), which is actuatable from the exterior, in axial direction out from the bore (26).

11. Valve arrangement with two directional valves (A, B) according to at least one of Claims 1 to 10, **characterized in that** both directional valves (A, B) are arranged parallel to each other in a shared housing (1), wherein the outer ends (6) of the elements (2, 6), which are actuatable from the exterior, lie adjacent to each other.

12. Valve arrangement according to Claim 11, **characterized in that** the radial connections (22) of the individual valves (A, B), leading to the radial through-opening (31) of the bush-shaped element (3), are preferably connected with a shared connection (20) on the shared housing (1), and the further radial opening (23) of the two valves leads to respectively a separate connection on the shared housing (1).

## Revendications

1. Soupape à voies multiples, constituée d'un alésage (26) avec deux sièges de soupape (27, 28) et de deux éléments de soupape (4, 30), déplaçables axialement dans l'alésage (26) et sollicités par un élément de ressort (9), ainsi que de trois raccords (22, 23, 25) menant dans l'alésage (26) et vers les éléments de soupape (4, 30), dans laquelle un passage (24) pour le fluide hydraulique va de la région entre les sièges de soupape (27, 28) vers le côté opposé à cette région d'au moins un siège de soupape (27, 28), laquelle région est ainsi soumise à la pression existante entre les sièges de soupape, **caractérisée en ce que** deux raccords (22, 23) mènent radialement dans l'alésage (26), mais de façon décalée dans le sens longitudinal, et un raccord (25), commandé par le premier siège de soupape (28) de l'alésage (26), y mène axialement, **en ce qu'**un deuxième siège de soupape (27) est prévu axialement déplaçable à l'intérieur de l'alésage (26), le premier siège de soupape (28) commandant la liaison entre le raccord axial (25) et l'un des raccords radiaux (23), et le deuxième siège de soupape (27) commandant la liaison entre les deux raccords radiaux (22, 23), et les deux éléments de soupape (4, 30) étant actionnables au moyen d'un élément (2, 6) pouvant être activé depuis l'extérieur.

2. Soupape à voies multiples selon la revendication 1, **caractérisée en ce que** les deux éléments de soupape (4, 30) sont accouplés entre eux, où l'élément de ressort (9) sollicite le premier élément de soupape (4) dans le sens de fermeture et le deuxième élément de soupape (30) dans le sens d'ouverture.

3. Soupape à voies multiples selon la revendication 1 ou 2, **caractérisée en ce que** le deuxième siège de soupape (27) est sollicité par un deuxième élément de ressort (9a), à distance du premier siège de soupape (28).

4. Soupape à voies multiples selon l'une des revendications 1 à 3, **caractérisée en ce que** les éléments de soupape (4, 30) présentent entre eux un espacement fixe, lequel espacement est inférieur à l'espacement maximal entre les sièges de soupape (27, 28).

5. Soupape à voies multiples selon l'une des revendications 1 à 4, **caractérisée en ce que** le deuxième siège de soupape (27) est formé à l'intérieur d'un élément (3) en forme de douille déplaçable dans l'alésage (26), un espace séparé par rapport au reste de l'alésage étant défini entre le côté extérieur de l'élément (3) et la paroi intérieure de l'alésage (26), l'élément en forme de douille (3) comportant au moins une ouverture de passage radiale (31) partant de l'un des raccords radiaux (22) jusqu'au siège de soupape (27), et le siège de soupape (27) dans l'élément en forme de douille (3) étant prévu entre les raccords radiaux (22, 23), vu dans le sens longitudinal.

6. Soupape à voies multiples selon la revendication 5, **caractérisée en ce que** l'élément (2, 6) actionnable depuis l'extérieur est guidé à travers l'élément en forme de douille (3), jusqu'au premier élément de soupape (4), et le deuxième élément de soupape (30) est prévu sur l'élément (2, 6) actionnable depuis l'extérieur.

7. Soupape à voies multiples selon l'une des revendications 1 à 6, **caractérisée en ce que**, dans une première position finale de l'élément actionnable depuis l'extérieur (2, 6), le premier siège de soupape (28) est fermé et l'autre siège de soupape (27) est ouvert, et le fluide hydraulique peut s'écouler entre les raccords radiaux (22, 23), et, dans la deuxième position finale de l'élément actionnable depuis l'extérieur (2, 6), le premier siège de soupape (28) est ouvert et l'autre siège de soupape (27) est fermé, et le fluide hydraulique peut s'écouler entre l'un des raccords radiaux (23) et le raccord axial (25).

8. Soupape à voies multiples selon l'une des revendications 1 à 7, **caractérisée en ce que** le raccord axial (25) est relié à l'environnement et protégé par un couvercle (7, 8, 10), conçu de manière étanche à la poussière et à l'eau et pourvu de préférence d'une membrane élastique (10).

9. Soupape à voies multiples selon la revendication 8, **caractérisée en ce que** le couvercle (7, 8, 10) sert de contre-appui au premier élément de ressort (9).

10. Soupape à voies multiples selon l'une des revendications 1 à 9, **caractérisée en ce que** le premier élément de ressort (9) pousse l'élément actionnable depuis l'extérieur (2, 6) hors de l'alésage (26), dans le sens axial.

11. Agencement de soupapes avec deux soupapes à voies multiples (A, B) selon au moins l'une des revendications 1 à 10, **caractérisé en ce que** les deux soupapes à voies multiples (A, B) sont disposées parallèlement l'une par rapport à l'autre dans un boîtier commun (1), les extrémités extérieures (6) des éléments actionnables depuis l'extérieur (2, 6) étant disposées côte à côte.

12. Agencement de soupapes selon la revendication 11, **caractérisé en ce que** les raccords radiaux (22) des différentes soupapes (A, B), menant vers l'ouverture de passage radiale (31) de l'élément en forme de douille (3), sont de préférence reliées sur le boîtier commun (1) avec un raccord commun (20), et l'ouverture radiale (23) supplémentaire des deux soupapes mène respectivement vers un raccord séparé sur le boîtier commun (1).
